# EUROPÄISCHE PATENTSCHRIFT

(11) **EP 2 210 471 B1**
(45) Veröffentlichungstag und Bekanntmachung des Hinweises auf die Patenterteilung: **04.12.2013**
(21) Anmeldenummer: 10150620.2
(22) Anmeldetag: 13.01.2010
(51) Int. Cl.: A01D 45/02, A01F 11/06

(54) **Selbstfahrendes Erntegerät für die Maisernte**
Self-propelled harvester for harvesting corn
Moissonneuse automobile pour la récolte de blé

(30) Priorität: 22.01.2009 AT 1042009
(43) Veröffentlichungstag der Anmeldung: 28.07.2010
(73) Patentinhaber: Tschiggerl, Franz, 8492 Halbenrain (AT); Tschiggerl, Harald, 8492 Halbenrain (AT)
(72) Erfinder: Tschiggerl, Franz, 8492, HALBENRAIN (AT); Tschiggerl, Harald, 8492, HALBENRAIN (AT); Tschiggerl, Christian, 8490, BAD RADKERSBURG (AT)
(74) Vertreter: Babeluk, Michael

(56) Entgegenhaltungen:
- EP-A1- 0 109 324
- FR-A1- 2 306 623
- FR-A1- 2 342 642
- US-A- 4 206 581
- US-A1- 2008 261 668
- US-B1- 6 358 141

## Beschreibung

Die Erfindung betrifft ein selbstfahrendes Erntegerät für die Maisernte mit einem Einzugkanal zum Einbringen der abgeernteten Fruchtstände in eine Rotortrommel zum Entfernen der Lieschen und Entkernen der Fruchtstände, wobei die Maiskörner durch eine von einem Windgebläse beaufschlagte Siebanordnung, bestehend aus einem Körnersieb und einem Untersieb, zu einer Förderschnecke für die Maiskörner gelangen, wobei ausgangsseitig der Rotortrommel eine Auswurfwalze angeordnet ist, die das anfallende Restmaterial bestehend aus den entkernten Maisspindeln, Lieschen und Blattresten in einen Auswurfkanal befördert, wobei im Bereich des Auswurfkanals ein Spindelsieb und eine Förderschnecke für die entkernten Maisspindeln angeordnet sind.

Bekannt sind Mähdrescher mit einer Einzugvorrichtung für die abgeernteten Fruchtstände, die einer Rotortrommel zum Entkernen zugeführt werden, wobei die Maiskörner nach der Passage des Rotors durch ein Sieb fallen und in einen Körnerspeicher gelangen. Bei einem Großteil der am Markt befindlichen Mähdrescher werden die Maisspindeln (die entkernten Maiskolben) mit der übrigen Spreu, die aus den Hüllblättern (Lieschen) der Maiskolben, sowie Blatt- und Stängelresten besteht, über einen Ejektor auf das Feld ausgebracht. Es ist allerdings bekannt, dass die Maisspindeln Inhaltsstoffe aufweisen, die deren Verrottung am bzw. im Feld erschweren, wobei hinzukommt, dass die Maisspindeln ein wertvoller Rohstoff sind, der einerseits einen hohen Brennwert aufweist und daher der thermischen Verwertung zugeführt werden kann und andererseits auch als Dämmmaterial und Bindemittel verwendet werden kann, wobei die der Verrottung entgegenstehenden Inhaltsstoffe von Vorteil sind.

Die am Markt befindlichen Geräte sind allerdings nicht geeignet, das Spindelmaterial sauber von der übrigen Spreu zu trennen. So ist beispielsweise aus der US 6,358,141 eine Erntemaschine bekannt, die ausgangsseitig der Rotortrommel eine Auswurfwalze aufweist, die die von den Körnern befreiten ganzen Spindeln samt Spreu auf ein Körnersieb lenkt, wobei mit einem Leitblech, dessen Abstand zum Körnersieb eingestellt werden kann, der Luftstrom gesteuert werden kann. Die Maiskörner fallen durch das Körnersieb und werden in einen Körnerbunker in der Erntemaschine transportiert. Die Maisspindeln verbleiben auf dem Körnersieb und gelangen mit Hilfe des Luftstromes eines Gebläses zu einer Förderschnecke und von dort in einen Förderschacht, der mit Hilfe eines Gebläses die Maisspindeln in einen separaten Spindelbunker der Erntemaschine ablagert. Die übrige Spreu wird vom Mähdrescher in bekannter Weise ausgeblasen. Nachteilig bei dieser Vorrichtung ist allerdings, dass die Abtrennung der Spindelfraktion nur unzureichend erfolgt und diese meist mit Spreuanteilen vermischt ist, wobei auch Teile der Maisspindeln auf das Feld gelangen können.

In der US 2008/0261668 A1 wird ausgehend von der oben genannten US 6,358,141 eine Verbesserung der Auftrennungsrate des Restmaterials in Kolben (cobs) und Spreu (chaff) angestrebt, wobei für diese Zwecke eine separate Siebeinheit herangezogen, die vom Körnersieb beabstandet angeordnet ist und über einen eigenen Antrieb sowie eine zusätzliche Windeinrichtung, bestehend aus einem Druckgebläse und einem Reinigungsgebläse, verfügt. In Auswurfrichtung der Auswurfwalze weist die obere Wand des Auswurfkanals einen schräg nach unten geneigten Wandabschnitt auf. Mit dieser Vorrichtung erfolgt lediglich eine Auftrennung in leichte Spreu, die durch das Reinigungsgebläse auf das landwirtschaftlich genutzte Feld ausgeblasen wird, sowie in Maisstroh (stover), welches mit Hilfe des Druckgebläses in einen oben am Erntefahrzeug angeordneten Behälter zur Sammlung und Lagerung des Maisstrohs geblasen wird. Diese Fraktion enthält zwar auch Maisspindeln, jedoch auch große Anteile von Maisstroh, sodass keine reine Spindelfraktion gewonnen werden kann.

Aufgabe der Erfindung ist es, ausgehend von den eingangs beschriebenen, bekannten Erntemaschinen, Verbesserungen vorzuschlagen, die bei einem Mähdrescher für die Maisernte die separate Gewinnung einer möglichst reinen Maisspindelfraktion zulassen.

Diese Aufgabe wird erfindungsgemäß dadurch gelöst, dass in Auswurfrichtung der Auswurfwalze ein im Wesentlichen senkrecht in den Auswurfkanal ragendes Prallblech angeordnet ist, welches das Restmaterial mit Unterstützung des Windgebläses auf das Spindelsieb lenkt, welches in Verlängerung des Körnersiebes angeordnet ist, mit diesem einen stumpfen Winkel zwischen 145° und 170° einschließt und das Restmaterial in eine reine Spindelfraktion und eine Spreufraktion auftrennt. Durch das innovative Spindelsieb in Zusammenwirkung mit dem in den Auswurfkanal ragenden Prallblech gelingt es, eine reine Spindelfraktion vom entkernten Restmaterial der Fruchtstände abzutrennen und separat zu bunkern.

Gewährleistet ist das dadurch, dass das vorzugsweise aus parallel angeordneten Stäben hergestellt Spindelsieb mit dem auf die Größe der Spindeln abgestellten Abstand von 7 cm bis 12 cm der einzelnen Stäbe nur die Spindeln in den Aufnahmeschacht für die Maisspindeln fallen lässt und die übrige Spreu mit Hilfe des Gebläses und der Düsenwirkung zwischen Prallblech und Spindelsieb wirksam ausgeblasen wird.

Erfindungsgemäß ist das Spindelsieb am auswurfseitigen Rand des Körnersiebes befestigt.

Gemäß einer Weiterbildung der Erfindung weist das Prallblech zum auswurfseitigen Rand des Körnersiebes einen Abstand von 10 cm bis 25 cm, vorzugsweise von 18 cm, auf.

Besonders vorteilhaft ist es, wenn das Prallblech in Bezug auf die Achse der Auswurfwalze eine Schrägstellung von ca. 10° bis 15° aufweist.

Es ist weiters von Vorteil, wenn zwischen dem Windgebläse und der Siebanordnung aus Körnersieb und Untersieb ein Windleitblech angeordnet ist, welches den Luftstrom in Richtung Spindelsieb optimiert.

Die Erfindung wird im Folgenden anhand von Beispielen näher erläutert. Es zeigen:
- Fig. 1: das erfindungsgemäße Erntegerät in einer Seitenansicht;
- Fig. 2: einen Teilschnitt des Erntegerätes aus Fig. 1 gemäß Linie II-II in Fig. 1;
- Fig. 3: eine Seitenansicht des Erntegerätes aus Fig. 1 von der gegenüberliegenden Seite; sowie die
- Fig. 4: bis Fig. 6 unterschiedliche Ausführungsvarianten für die Anordnung eines Maisspindelbunkers des erfindungsgemäßen Erntegerätes gemäß Fig. 1.

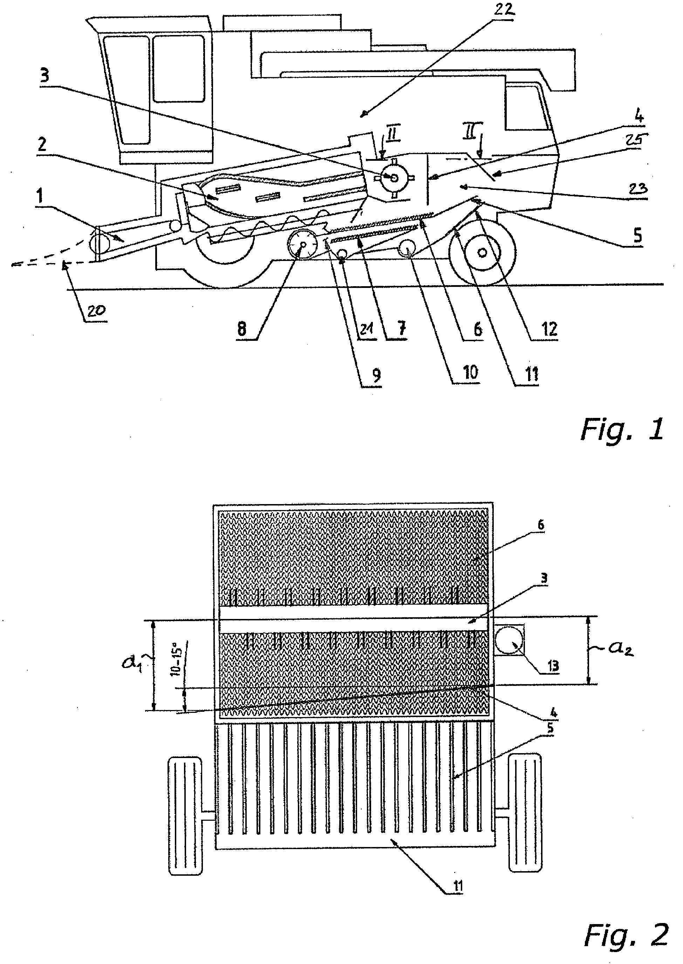

Der in den Figuren 1 bis 3 dargestellten Mähdrescher für die Maisernte ist mit einem Einzugkanal 1 zum Einbringen der abgeernteten Fruchtstände einer Maispflanze ausgestattet, wobei ein Mähwerk 20 zum Abtrennen bzw. Abschneiden der Fruchtstände nur strichliert angedeutet ist. Der Einzugkanal 1 transportiert die Fruchtstände in eine Rotortrommel 2, in welcher die Hüllblätter (Lieschen) entfernt und die Fruchtstände entkernt werden. Die Maiskörner gelangen durch eine von einem Windgebläse 8 beaufschlagte Siebanordnung zu einer Förderschnecke 21 für die Maiskörner, wobei die Siebanordnung aus einem Körnersieb 6 und einem Untersieb 7 besteht, die nach hinten leicht ansteigend angeordnet sind. Über die Förderschnecke 21 wird eine nicht weiter dargestellte Förderverbindung zu einem Körnerspeicher 22 im Erntegerät hergestellt.

Ausgangsseitig der Rotortrommel 2 ist eine Auswurf- bzw. Häckselwalze 3 über eine Breite von 130 cm bis 150 cm angeordnet, die das ausgangsseitig der Rotortrommel 2 anfallende Restmaterial, bestehend aus den entkernten Maisspindeln, Lieschen und Blatt- bzw. Stängelresten in einen Auswurfkanal 23 des Erntegerätes befördert, wobei in Auswurfrichtung der Auswurfwalze 3 ein Prallblech 4 in den Auswurfkanal 23 ragt, welches das Restmaterial mit Unterstützung eines Windgebläses 8 auf ein Spindelsieb 5 lenkt, welches in Verlängerung des Körnersiebes 6 angeordnet ist und das Restmaterial in eine reine Spindelfraktion und eine Spreufraktion auftrennt. Die Spreufraktion wird wie bei herkömmlichen Erntegeräten auf das Feld ausgetragen.

Das Spindelsieb 5 ist am auswurfseitigen Ende des Körnersiebes 6 befestigt und schließt mit diesem einen stumpfen Winkel zwischen 145° und 170° ein. Das Spindelsieb 5 weist parallel angeordnete, in Auswurfrichtung verlaufende Stäbe auf, z.B. Rundstäbe mit einem Durchmesser von 12 mm, die einen Abstand von 7 cm bis 12 cm und eine Länge von 40 cm bis 70 cm, vorzugsweise von 65 cm, aufweisen.

Das Prallblech 4, welches in Bezug auf die Achse 3' der Auswurfwalze 3 eine Schrägstellung von ca. 10° bis 15° aufweist (siehe Fig. 2: Abstand a₁ beträgt ca. 70 cm, Abstand a₂ ca. 60 cm), ragt im Wesentlichen senkrecht in den Auswurfkanal 23, wobei zum auswurfseitigen Rand des Körnersiebes 6 bzw. zum Spindelsieb 5 ein Abstand von 10 cm bis 25 cm, vorzugsweise von 18 cm, entsteht. Durch die Schrägstellung des Prallbleches 4 wird die - aufgrund der Rotation der Rotortrommel 2 - einseitige Beladung des Spindelsiebes 5 ausgeglichen.

Das Spindelsieb 5 bildet gemeinsam mit einem schräg nach oben geneigten Schachtblech 11 einen zur Spindelförderschnecke 10 führenden Aufnahmeschacht für die Maisspindeln, wobei der Aufnahmeschacht großteils vom Spindelsieb 5 abgedeckt ist, so dass ausschließlich Maisspindeln in den Schacht gelangen können.

Zwischen dem Windgebläse 8 und der Siebanordnung aus Körnersieb 6 und Untersieb 7 ist ein im Winkel von 32° bis 37° zur Waagrechten verstellbares Windleitblech 9 angeordnet, mit welchem den Luftstrom in Richtung des Spindelsiebes 5 optimal eingestellt werden kann.

Das Schachtblech 11 des Aufnahmeschachtes für die Maisspindeln weist einen in der Neigung verstellbaren Endbereich 12 auf. Der Durchtrittsquerschnitt zwischen dem oberen Leitblech 25 und dem Schachtblech 11 kann dadurch verstellt bzw. optimiert werden, so dass der Reinheitsgrad der Spindelfraktion auf ca. 95% erhöht werden kann.

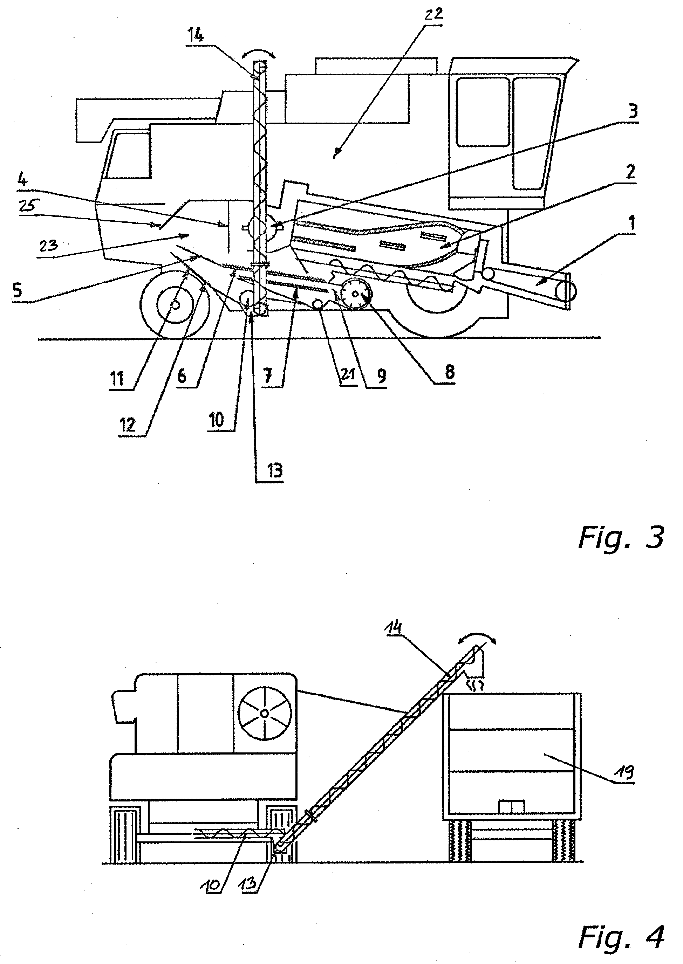

Die Spindelförderschnecke 10 für die Maisspindeln, die einen Durchmesser von ca. 17 cm aufweist, mündet in einen seitlich des Erntegerätes angeordneten Spindelauffangschacht 13, von welchem eine schwenkbare Förderschnecke 14 mit unterschiedlichen Spindelbunkern 15, 17 oder 19 in Kontakt treten kann (siehe Fig. 4 bis Fig. 6).

Bei der Ausführungsvariante gemäß Fig. 4 ist der Spindelbunker 19 als Teil, beispielsweise als kippbarer Ladeaufbau, eines separaten Begleitfahrzeugs ausgeführt, in welchen die schwenkbare Förderschnecke 14 mündet.

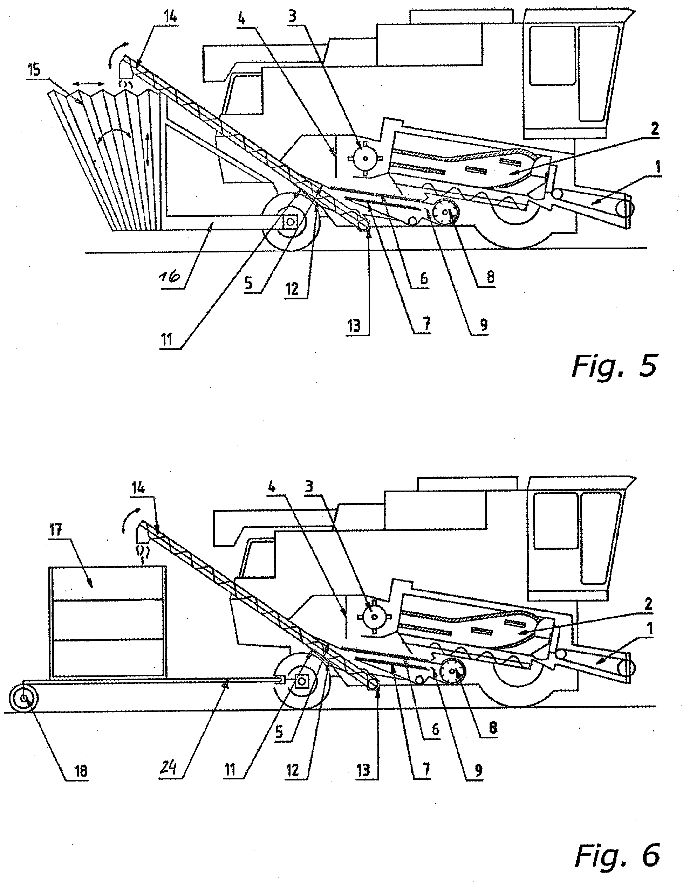

Bei einer weiteren Ausführungsvariante gemäß Fig. 5 ist der Spindelbunker (15) mit Hilfe einer Halterung 16 am Erntegerät befestigt und kann beispielsweise als Faltenbalgkonstruktion mit variablem Volumen von bis zu 7 m³ ausgeführt sein.

Schließlich kann der Spindelbunker 17 gemäß Fig. 6 auf einer an das Erntegerät anlenkbaren Anhängerkonstruktion 24 gelagert sein, welche ein Stützrad 18 mit einer Schwenkachse aufweist.

## Patentansprüche

1. Selbstfahrendes Erntegerät für die Maisernte mit einem Einzugkanal (1) zum Einbringen der abgeernteten Fruchtstände in eine Rotortrommel (2) zum Entfernen der Lieschen und Entkernen der Fruchtstände, wobei die Maiskörner durch eine von einem Windgebläse (8) beaufschlagte Siebanordnung, bestehend aus einem Körnersieb (6) und einem Untersieb (7), zu einer Förderschnecke (21) für die Maiskörner gelangen, wobei ausgangsseitig der Rotortrommel (2) eine Auswurfwalze (3) angeordnet ist, die das anfallende Restmaterial bestehend aus den entkernten Maisspindeln, Lieschen und Blattresten in einen Auswurfkanal (23) befördert, wobei im Bereich des Auswurfkanals (23) ein Spindelsieb (5) und eine Förderschnecke (10) für die entkernten Maisspindeln angeordnet sind, **dadurch gekennzeichnet, dass** in Auswurfrichtung der Auswurfwalze (3) ein im Wesentlichen senkrecht in den Auswurfkanal (23) ragendes Prallblech (4) angeordnet ist, welches das Restmaterial mit Unterstützung des Windgebläses (8) auf das Spindelsieb (5) lenkt, welches in Verlängerung des Körnersiebes (6) angeordnet ist, mit diesem einen stumpfen Winkel zwischen 145° und 170° einschließt und das Restmaterial in eine reine Spindelfraktion und eine Spreufraktion auftrennt.

2. Erntegerät nach Anspruch 1, **dadurch gekennzeichnet, dass** das Spindelsieb (5) am auswurfseitigen Rand des Körnersiebes (6) befestigt ist.

3. Erntegerät nach Anspruch 1 oder 2, **dadurch gekennzeichnet, dass** das Spindelsieb (5) aus parallel angeordneten Stäben, vorzugsweise Rundstäben, besteht, die einen Abstand von 7 cm bis 12 cm und eine Länge von 40 cm bis 70 cm, vorzugsweise von 65 cm, aufweisen.

4. Erntegerät nach einem der Ansprüche 1 bis 3, **dadurch gekennzeichnet, dass** das Spindelsieb (5) gemeinsam mit einem Schachtblech (11) einen zur Spindelförderschnecke (10) führenden Aufnahmeschacht für die Maisspindeln bilden.

5. Erntegerät nach einem der Ansprüche 1 bis 4, **dadurch gekennzeichnet, dass** das Prallblech (4) zum auswurfseitigen Rand des Körnersiebes (6) einen Abstand von 10 cm bis 25 cm, vorzugsweise von 18 cm, aufweist.

6. Erntegerät nach Anspruch 5, **dadurch gekennzeichnet, dass** das Prallblech (4) in Bezug auf die Achse (3') der Auswurfwalze (3) eine Schrägstellung von ca. 10° bis 15° aufweist.

7. Erntegerät nach einem der Ansprüche 1 bis 6, **dadurch gekennzeichnet, dass** zwischen dem Windgebläse (8) und der Siebanordnung aus Körnersieb (6) und Untersieb (7) ein Windleitblech (9) angeordnet ist, welches den Luftstrom in Richtung Spindelsieb (5) optimiert.

8. Erntegerät nach einem der Ansprüche 1 bis 7, **dadurch gekennzeichnet, dass** das Schachtblech (11) des Aufnahmeschachtes für die Maisspindeln einen in der Neigung verstellbaren Endbereich (12) aufweist.

9. Erntegerät nach einem der Ansprüche 1 bis 8, **dadurch gekennzeichnet, dass** die Förderschnecke (10) für die Maisspindeln in einen seitlich des Erntegerätes angeordneten Spindelauffangschacht (13) mündet, von welchem eine schwenkbare Förderschnecke (14) in einen Spindelbunker (15, 17, 19) führt.

10. Erntegerät nach Anspruch 9, **dadurch gekennzeichnet, dass** der Spindelbunker (15) mit Hilfe einer Halterung (16) am Erntegerät befestigt ist und als Faltenbalgkonstruktion mit variablem Volumen ausgeführt ist.

11. Erntegerät nach Anspruch 9, **dadurch gekennzeichnet, dass** der Spindelbunker (17) auf einer an das Erntegerät anlenkbaren Anhängerkonstruktion (24) gelagert ist welche ein Stützrad (18) mit einer Schwenkachse aufweist.

## Claims

1. A self-propelled harvesting machine for harvesting corn, comprising a feeder duct (1) for introducing the harvested infructescences into a rotor drum (2) for removing the husks and the cores of the infructescences, wherein the corn grains reach a screw conveyor (21) for the corn grains through a sieve arrangement which consists of a grain sieve (6) and a bottom sieve (7) and which is subjected to a wind blower (8), wherein an ejection roller (3) is arranged on the output side of the rotor drum (2), which ejection roller conveys the produced residual material consisting of the pitted corncobs, husks and leaf residues into an ejection channel (23), wherein a cob sieve (5) and a screw conveyor (10) for the pitted corncobs are arranged in the region of the ejection channel (23), **characterised in that** a baffle plate (4) which protrudes substantially perpendicularly into the ejection channel (23) is arranged in the ejection direction of the ejection roller (3), which baffle plate guides the residual material with the support of the wind blower (8) to the cob sieve (5), which is arranged in extension of the grain sieve (6), encloses an obtuse angle of between 145° and 170° with the same, and separates the residual material into a pure cob fraction and chaff fraction.

2. A harvesting machine according to claim 1, **characterised in that** the cob sieve (5) is fixed to the edge of the grain sieve (6) on the ejection side.

3. A harvesting machine according to claim 1 or 2, **characterised in that** the cob sieve (5) consists of rods, preferably round rods, which are arranged in parallel and which have a distance of 7 cm to 12 cm and length of 40 cm to 70 cm, preferably 65 cm.

4. A harvesting machine according to one of the claims 1 to 3, **characterised in that** the cob sieve (5), together with a chute plate (11), forms a receiving chute for the corncobs which leads to the cob screw conveyor (10).

5. A harvesting machine according to one of the claims 1 to 4, **characterised in that** the baffle plate (4) has a distance of 10 cm to 25 cm, preferably 18 cm, from the edge of the grain sieve (6) on the ejection side.

6. A harvesting machine according to claim 5, **characterised in that** the baffle plate (4) has an oblique position of approx. 10° to 15° with respect to the axis (3') of the ejection roller (3).

7. A harvesting machine according to one of the claims 1 to 6, **characterised in that** a wind guide plate (9) is arranged between the wind blower (8) and the sieve arrangement consisting of grain sieve (6) and bottom sieve (7), which wind guide plate optimizes the air stream in the direction of the cob sieve (5).

8. A harvesting machine according to one of the claims 1 to 7, **characterised in that** the chute plate (11) of the receiving chute for the corncobs has an end region (12) which is adjustable in its inclination.

9. A harvesting machine according to one of the claims 1 to 8, **characterised in that** the screw conveyor (10) for the corncobs opens into a cob collection chute (13) arranged laterally to the harvesting machine, from which a pivotable screw conveyor (14) leads to a cob bunker (15, 17, 19).

10. A harvesting machine according to claim 9, **characterised in that** the cob bunker (15) is fixed by means of a fixing device (16) to the harvesting machine and is arranged as a bellows construction of variable volume.

11. A harvesting machine according to claim 9, **characterised in that** the cob bunker (17) is mounted on a trailer construction (24) which can be linked to the harvesting machine and which comprises a support wheel (18) with a swivelling axis.

## Revendications

1. Moissonneuse automotrice pour la récolte du maïs comportant un canal d'alimentation (1) pour l'amenée des infrutescences récoltées dans un tambour rotatif (2) pour permettre d'éliminer les dépouilles et de dégermer les infrutescences, les grains de maïs parvenant, par un dispositif de tamis alimenté par une soufflante (8) et constitué d'un tamis à grains (6) et d'un tamis inférieur (7) sur une vis d'alimentation (21) des grains de maïs, dans laquelle, côté sortie du tambour rotatif (2) est monté un cylindre d'évacuation (3) qui transfère les matières résiduelles séparées constituées de rafles de maïs dégermées de dépouilles et de résidus de feuilles dans un canal d'évacuation (23), dans la zone de ce canal d'évacuation (23) étant montés un tamis à rafles de maïs (5) et une vis sans fin d'alimentation (10) des rafles de maïs dégermées,
**caractérisée en ce que**
dans la direction d'évacuation du cylindre d'évacuation (3) est montée une tôle formant chicane (4) s'étendant essentiellement perpendiculairement dans le canal d'évacuation (23), qui dirige les matières résiduelles avec l'aide de la soufflante (8) sur le tamis à rafles de maïs (5) qui est monté dans le prolongement du tamis à grains (6), en définissant avec ce tamis un angle obtus compris entre 145° et 170° et sépare les matières résiduelles en une fraction de rafles de maïs pures et une fraction de paille.

2. Moissonneuse conforme à la revendication 1,
**caractérisée en ce que**
le tamis à rafles de maïs (5) est fixé sur le bord d'évacuation du tamis à grains (6).

3. Moissonneuse conforme à la revendication 1 ou 2,
**caractérisée en ce que**
le tamis à rafles de maïs (5) est constitué de deux barres de préférence de barres rondes montées parallèlement, qui sont situées à une distance comprise entre 7 et 12 cm et ont une longueur de 40 à 70 cm, de préférence de 65 cm.

4. Moissonneuse conforme à l'une des revendications 1 à 3,
**caractérisée en ce que**
le tamis à rafles de maïs (5) forme, avec une tôle formant puits (11) un puits de réception des rafles de maïs conduisant à la vis d'alimentation des rafles de maïs (10).

5. Moissonneuse conforme l'une des revendications 1 à 4,
**caractérisée en ce que**
la tôle formant chicane (4) a par rapport au bord situé côté évacuation du tamis à grains (6) une distance de 10 à 25 cm, de préférence de 18 cm.

6. Moissonneuse conforme à la revendication 5,
**caractérisée en ce que**
la tôle formant chicane (4) a par rapport à l'axe (3') du rouleau d'évacuation (3) une position en biais d'environ 10° à 15°.

7. Moissonneuse conforme à l'une des revendications 1 à 6,
**caractérisée en ce qu'**
entre la soufflante (8) et le dispositif de tamis formé par le tamis à grains (6) et le tamis inférieur (7) est montée une tôle paravent (9) qui optimise le flux d'air en direction du tamis de rafles de maïs (5).

8. Moissonneuse conforme l'une des revendications 1 à 7,
**caractérisée en ce que**
la tôle formant puits (11) du puits de réception des rafles de maïs comporte une zone d'extrémité (12) à inclinaison réglable.

9. Moissonneuse conforme l'une des revendications 1 à 8,
**caractérisée en ce que**
la vis sans fin d'alimentation (10) des rafles de maïs débouche dans un puits de réception des rafles (13) monté latéralement sur la moissonneuse à partir duquel une vis sans fin d'alimentation pivotante (14) conduit dans un réservoir de rafles de maïs (15, 17, 19).

10. Moissonneuse conforme à la revendication 9,
**caractérisée en ce que**
le réservoir de rafles de maïs (15) est fixé sur la moissonneuse à l'aide d'un élément de fixation (16) et est réalisé sous la forme d'une construction en accordéon ayant un volume variable.

11. Moissonneuse conforme à la revendication 9,
**caractérisée en ce que**
le réservoir de rafles de maïs (17) est logé sur une remorque (24) articulée sur la moissonneuse qui comporte une roue d'appui (18) avec un axe de pivotement.
